Europäisches Patentamt

European Patent Office

Office européen des brevets

(19)

(11) EP 1 146 687 A2

(12) EUROPEAN PATENT APPLICATION

(43) Date of publication:
17.10.2001 Bulletin 2001/42

(51) Int Cl.⁷: H04L 12/24

(21) Application number: 01107393.9

(22) Date of filing: 26.03.2001

(84) Designated Contracting States:
AT BE CH CY DE DK ES FI FR GB GR IE IT LI LU
MC NL PT SE TR
Designated Extension States:
AL LT LV MK RO SI

(30) Priority: 12.04.2000 US 548124

(71) Applicant: Hewlett-Packard Company,
A Delaware Corporation
Palo Alto, CA 94304 (US)

(72) Inventor: Rhodes, N. Lee
Los Altos, California 94024 (US)

(74) Representative: Schoppe, Fritz, Dipl.-Ing.
Patentanwälte Schoppe, Zimmermann,
Stöckeler & Zinkler,
Postfach 71 08 67
81458 München (DE)

(54) Internet usage analysis system and method

(57)     A system and method for analyzing network usage (30, 58). The method includes defining a statistical model (50) for solving a network usage related business problem (60). Critical usage data types are determined that are required by the statistical model (62). Critical usage data is collected (32) of the critical usage data types from a usage data source (64). Statistical data (52) is generated using the critical usage data and the statistical model (66). The statistical data (52) is stored (68), in lieu of retaining the critical usage data. The statistical data (52) is analyzed to produce a result addressing the network usage related business problem (69). The statistical model (50) may be used to perform interactive, real time analysis of the network usage related business problem.

Fig. 1

**Description**

**The Field of the Invention**

The present invention relates to a network usage analysis system and method, and more particularly; to an Internet usage analysis system and method providing direct statistical representation of usage information that provides compact storage and real time interactive usage analysis.

**Background of the Invention**

Network systems are utilized as communication links for everyday personal and business purposes. With the growth of network systems, particularly the Internet, and the advancement of computer hardware and software technology, network use ranges from simple communication exchanges such as electronic mail to more complex and data intensive communication sessions such as web browsing, electronic commerce, and numerous other electronic network services such as Internet voice, and Internet video-on-demand.

Network usage information does not include the actual information exchanged in a communications session between parties, but rather includes metadata (data about data) information about the communication sessions and consists of numerous usage detail records (UDRs). The types of metadata included in each UDR will vary by the type of service and network involved, but will often contain detailed pertinent information about a particular event or communications session between parties such as the session start time and stop time, source or originator of the session, destination of the session, responsible party for accounting purposes, type of data transferred, amount of data transferred, quality of service delivered, etc. In telephony networks, the UDRs that make up the usage information are referred to as a call detail records or CDRs. In Internet networks, usage detail records do not yet have a standardized name, but in this application they will be referred to as internet detail records or IDRs. Although the term IDR is specifically used throughout this application in an Internet example context, the term IDR is defined to represent a UDR of any network.

Network usage information is useful for many important business functions such as subscriber billing, marketing & customer care, and operations management. Network usage data reporting systems are utilized for collecting, correlating, and aggregating network usage information as it occurs and creating UDRs as output that can be consumed by computer business systems that support the above business functions. Examples of these computer business systems include billing systems, marketing and customer relationship management systems, customer churn analysis systems, and data mining systems.

Especially for Internet networks, several important technological changes are key drivers in creating increasing demand for timely and cost-effective analysis of Internet usage information or the underlying IDRs.

One technological change is the dramatically increasing Internet access bandwidth at moderate subscriber cost. Most consumers today have only limited access bandwidth to the Internet via an analog telephony modem, which has a practical data transfer rate upper limit of about 56 thousand bits per second. When a network service provider's subscribers are limited to these slow rates there is an effective upper bound to potential congestion and overloading of the service provider's network. However, the increasing wide scale deployments of broadband Internet access through digital cable modems, digital subscriber line, microwave, and satellite services are increasing the Internet access bandwidth by several orders of magnitude. As such, this higher access bandwidth significantly increases the potential for network congestion and bandwidth abuse by heavy users. With this much higher bandwidth available, the usage difference between a heavy user and light user can be quite large, which makes a fixed-price, all-you-can-use pricing plan difficult to sustain; if the service provider charges too much for the service, the light users will be subsidizing the heavy users; if the service provider charges too little, the heavy users will abuse the available network bandwidth, which will be costly for the service provider.

Another technological change is the rapid growth of applications and services that require high bandwidth. Examples include Internet telephony, video-on-demand, and complex multiplayer multimedia games. These types of services increase the duration of time that a user is connected to the network as well as requiring significantly more bandwidth to be supplied by the service provider.

Another technological change is the transition of the Internet from "best effort" to "mission critical". As many businesses are moving to the Internet, they are increasingly relying on this medium for their daily success. This transitions the Internet from a casual, best-effort delivery service into the mainstream of commerce. Business managers will need to have quality of service guarantees from their service provider and will be willing to pay for these higher quality services.

Due to the above driving forces, Internet service providers are moving from current, fixed-rate, all-you-can-use Internet access billing plans to more complex billing plans that charge by metrics, such as volume of data transferred, bandwidth utilized, service used, time-of-day, and subscriber class, which defines a similar group of subscribers by their usage profile, organizational affiliation, or other attributes.

An example of such a rate structure might include a fixed monthly rate portion, a usage allocation to be included as part of the fixed monthly rate (a threshold), plus a variable rate portion for usage beyond the allocation (or threshold). For a given service provider there will be many such rate structures for the many possible combinations of services and subscriber classes.

Network usage analysis systems provide information about how the service provider's services are being used and by whom. This is vital business information that a service provider must have in order to identify fast moving trends, establish competitive prices, and define new services or subscriber class as needed. Due to the rapid pace that new Internet services are appearing, the service provider must have quick access to this vital information. Known analysis packages feed the network usage data into large databases, and then perform subsequent analysis on the data at a later time. These database systems can get quite large. A service provider with one million subscribers can generate tens to hundreds of gigabytes of usage data every day. Although the technology for storing vast amounts of data has been steadily improving, Internet traffic is growing at a much faster pace. Storing all of this data is expensive and may eventually become prohibitive. Large and expensive supporting hardware is required (e.g., terabyte disk storage, back-up systems) and expensive relational database management software systems (RDBMS) are required to support very high transaction rates and large file sets. Further, database administrative personnel must be employed to support and maintain these large database management systems.

Once the type of analysis is determined, data mining and analysis software systems are utilized to query and analyze the large amounts of network usage information stored in the databases. The use of data mining and analysis software systems often requires additional business analysis consulting services, additional support hardware, and data mining software licenses. Further, given the amount of data that needs to be processed, it may take days to weeks to extract the needed information.

For reasons stated above and for other reasons presented in greater detail in the Description of the Preferred Embodiment section of the present specification, more advanced techniques are required in order to more compactly represent key usage information and provide for more timely extraction of the relevant business information from this usage information.

## Summary of the Invention

The present invention is a network usage analysis system and method providing direct statistical representation of usage information that provides compact storage and real time interactive usage analysis.

The present invention provides a system and method for analyzing Internet usage by collecting IDRs and saving the critical usage data therein in a highly compact form of a statistical model. It is not necessary to retain the original IDRs, thus allowing for significant savings in storage management costs. The statistical model can then be used directly to address questions within a specific business area of interest to the service provider. By allowing the user to adjust various key variables, this invention allows the user to perform "what-if" analysis in an interactive and timely fashion.

In one embodiment, the present invention provides a method for analyzing network usage. The method includes defining a statistical model for solving a network usage related business problem. Critical usage data types are determined that are required by the statistical model. Critical usage data are collected of the critical usage data types from a usage data source or a network usage data reporting system. Statistical data are generated using the critical usage data and the statistical model. The statistical data are stored.

The method further includes the step of analyzing the statistical data to produce a result addressing the network usage related business problem. The step of collecting the critical usage data may include the steps of receiving usage data from the usage data source or a network usage data reporting system and collecting the critical usage data from the usage data. In one aspect, the method includes the step of storing the critical usage data collected from the usage data.

The method may further include the step of collecting a second set of critical usage data and updating the statistical data using the second set of critical usage data.

In one aspect the statistical model is a histogram. In another aspect, the statistical model is an ordered histogram. In another aspect, the statistical model is a probability density function. In another aspect, the statistical model is a cumulative probability distribution function. The step of storing the statistical data may include the step of storing the statistical data in a table. In one aspect, the table is a distribution table. In one aspect the table is an accumulation table. In one aspect the table is a 24-hour profile table. In one aspect the table is a top-10 table.

The step of generating the statistical data may include generating the statistical data in real time. The method may further include the step of deleting the critical usage data after storing the statistical data. In one aspect, the step of defining a statistical model includes the step of defining the statistical model to include a variable element. The method further comprises the step of changing the variable element to interactively model network usage. In one

3

aspect, the step of analyzing the statistical data includes the step of analyzing the statistical data in real time. In one aspect, the network is an Internet network. In one aspect, the method further includes the step of deleting the critical usage data after storing the statistical data.

The method includes the step of using the statistical model to perform interactive analysis using the statistical data.

In another embodiment, the present invention provides a network usage analysis system. The system includes a critical usage data collector for collecting a set of critical usage data from usage data that comes from a usage data source. The critical usage data corresponds to a predefined statistical model for solving a network usage related business problem. A critical usage data analysis system server is provided. The critical usage data analysis system server receives the set of critical usage data from the critical usage data collector and generates statistical data based on the set of critical usage data and the predefined statistical model. A data storage system is provided, wherein the critical usage data analysis system server stores the statistical data in the data storage system.

In one aspect, the data storage system includes random access memory (i.e., volatile storage). In one aspect, the data storage system includes a hard disk drive or other persistent storage device.

The system may further include a user interface operably coupled to the critical usage data analysis system server. The critical usage data analysis system server is responsive to the user interface for interactive analysis of the statistical model. In one aspect, the network is an Internet network. The system may further include a display system for displaying results from analysis of the statistical model.

In one aspect the statistical model is a histogram. In another aspect, the statistical model is an ordered histogram. In another aspect, the statistical model is a probability density function. In another aspect, the statistical model is a cumulative probability distribution function. The step of storing the statistical data may include the step of storing the statistical data in a table. In one aspect, the table is a distribution table. In one aspect, the table is an accumulation table. In one aspect, the table is a 24-hour profile table. In one aspect, the table is a top-10 table.

In another embodiment, the present invention provides a method for analyzing network usage, including financial analysis of the network service provider. The method includes the step of defining a financial model. A statistical model is defined for use with the financial model for solving a financial network usage related business problem. Critical usage data types are determined that are required by the statistical model. Critical usage data is collected of the critical usage data types from a usage data source. Statistical data is generated using the critical usage data and the statistical model. The statistical data is stored.

In one aspect, the method further includes the step of analyzing the financial model and the statistical model to produce a result addressing the financial network usage related problem.

In one aspect, the step of defining a statistical model includes the step of defining a histogram. The step of storing the statistical data includes the step of storing the statistical data in an accumulation table. In one aspect, the step of defining a histogram includes the step of defining the histogram to include subscriber-accumulated usage in predefined megabyte ranges.

In one aspect, the step of defining a statistical model includes the step of defining an ordered histogram. The method further includes the step of generating the ordered histogram using the statistical data stored in the accumulation table. The ordered histogram is stored in the distribution table. The step of defining a statistical model further includes the step of defining a cumulative probability distribution. The method further includes the step of determining the cumulative probability distribution using the ordered histogram. The cumulative probability distribution is stored in the distribution table.

The method may include the step of determining revenue using the distribution table in the financial model. The method may include of determining profit using the distribution table and the financial model.

In one aspect, the step of defining a statistical model includes the step of defining a multi-dimensional statistical model corresponding to the financial model. The step of storing the statistical data includes the step of storing the statistical data in a multi-dimensional data structure. The method may further include the step of modeling the network service provider using the multi-dimensional data structure, including defining the statistical model to include a variable element. The variable element is changed by the user for interactive financial analysis of the network service provider.

In another embodiment, the present invention provides a computer readable medium containing instructions for controlling a computer system to perform a method for analyzing network usage. The method includes defining a statistical model for solving a network usage related business problem. Critical usage data types are determined that are required by the statistical model. Critical usage data are collected of the critical usage data types from a usage data source or a network usage data reporting system. Statistical data are generated using the critical usage data and the statistical model. The statistical data are stored.

The method further includes the step of analyzing the statistical data to produce a result addressing the network usage related business problem. The step of collecting the critical usage data may include the steps of receiving usage data from the usage data source or a network usage data reporting system and collecting the critical usage data from the usage data. In one aspect, the method includes the step of storing the critical usage data collected from the usage data.

In another embodiment, the present invention provides a computer readable medium containing instructions for controlling a computer system to perform a method for analyzing network usage, including financial analysis of the network service provider. The method includes the step of defining a financial model. A statistical model is defined for use with the financial model for solving a financial network, usage related business problem. Critical usage data types are determined that are required by the statistical model. Critical usage data is collected of the critical usage data types from a usage data source. Statistical data is generated using the critical usage data and the statistical model. The statistical data is stored.

In one aspect, the method further includes the step of analyzing the financial model and the statistical model to produce a result addressing the financial network usage related problem.

In one aspect, the step of defining a statistical model includes the step of defining a histogram. The step of storing the statistical data includes the step of storing the statistical data in an accumulation table. In one aspect, the step of defining a histogram includes the step of defining the histogram to include subscriber-accumulated usage in predefined megabyte ranges.

In one aspect, the step of defining a statistical model includes the step of defining an ordered histogram. The method further includes the step of generating the ordered histogram using the statistical data stored in the accumulation table. The ordered histogram is stored in the distribution table. The step of defining a statistical model further includes the step of defining a cumulative probability distribution. The method further includes the step of determining the cumulative probability distribution using the ordered histogram. The cumulative probability distribution is stored in the distribution table.

The method may include the step of determining revenue using the distribution table in the financial model. The method may include of determining profit using the distribution table and the financial model.

In one aspect, the step of defining a statistical model includes the step of defining a multi-dimensional statistical model corresponding to the financial model. The step of storing the statistical data includes the step of storing the statistical data in a multi-dimensional data structure. The method may further include the step of modeling the network service provider using the multi-dimensional data structure, including defining the statistical model to include a variable element. The variable element is changed by the user for interactive financial analysis of the network service provider.

Although the term network is specifically used throughout this application, the term network is defined to include the Internet and other network systems, including public and private networks that may or may not use the TCP/IP protocol suite for data transport. Examples include the Internet, Intranets, extranets, telephony networks, and other wire-line and wireless networks. Although the term Internet is specifically used throughout this application, the term Internet is an example of a network.

**Brief Description of the Drawings**

Figure 1 is a block diagram of a network usage analysis system according to the present invention providing direct statistical representation of usage information that provides compact storage and real time interactive usage analysis.

Figure 2 is a flow diagram illustrating one exemplary embodiment of a method for analyzing network usage according to the present invention including providing direct statistical representation of usage information, compact storage and real time interactive usage analysis.

Figure 3 is a diagram illustrating one exemplary embodiment of a histogram statistical model.

Figure 4 is a diagram illustrating one exemplary embodiment of an ordered histogram statistical model.

Figure 5 is a diagram illustrating one exemplary embodiment of a probability density function statistical model.

Figure 6 is a diagram illustrating one exemplary embodiment of a cumulative probability distribution function statistical model.

Figure 7 is a diagram illustrating one exemplary embodiment of a simple business model including a simple financial model of usage-based billing for a typical service provider.

Figure 8 illustrates one exemplary embodiment of a simple accumulation table used in a network usage analysis system according to the present invention.

Figure 9 illustrates one exemplary embodiment of a usage detail record or Internet detail record used in a network usage analysis system according to the present invention.

Figure 10 illustrates one exemplary embodiment of a distribution table used in a network usage analysis system according to the present invention.

Figure 11 illustrates one exemplary embodiment of example values of a probability distribution column of a distribution table according to the present invention used to show how percent of subscribers with usage in excess of T megabytes can be calculated.

Figure 12 is a diagram illustrating one exemplary embodiment of a more complex business model of a service provider that contains multiple services and multiple subscriber classes used in a network usage analysis system according to the present invention. At the intersection of each of the services and subscriber classes this figure also illustrates one exemplary embodiment of the types of statistical data tables that may be located there and then used in a network usage analysis system according to the present invention.

Figure 13 is a diagram illustrating one exemplary embodiment of a hierarchical view of stored multidimensional statistical models used in a network usage analysis system according to the present invention.

Figure 14 is a table illustrating one exemplary embodiment of a table of profile statistics used in a network usage analysis system according to the present invention.

Figure 15 is a block diagram illustrating one exemplary embodiment of a network usage analysis system according to the present invention including off-line business analysis using a client-server model.

Figure 16 is a flow diagram illustrating one exemplary embodiment of a method for analyzing network usage, including financial analysis of a network service provider, according to the present invention.

## Description of the Preferred Embodiments

In the following detailed description of the preferred embodiments, reference is made to the accompanying drawings that form a part hereof and show, by way of illustration, specific embodiments in which the invention may be practiced. It is to be understood that other embodiments may be utilized and structural or logical changes may be made without departing from the scope of the present invention. The following detailed description, therefore, is not to be taken in a limiting sense, and the scope of the present invention is defined by the appended claims.

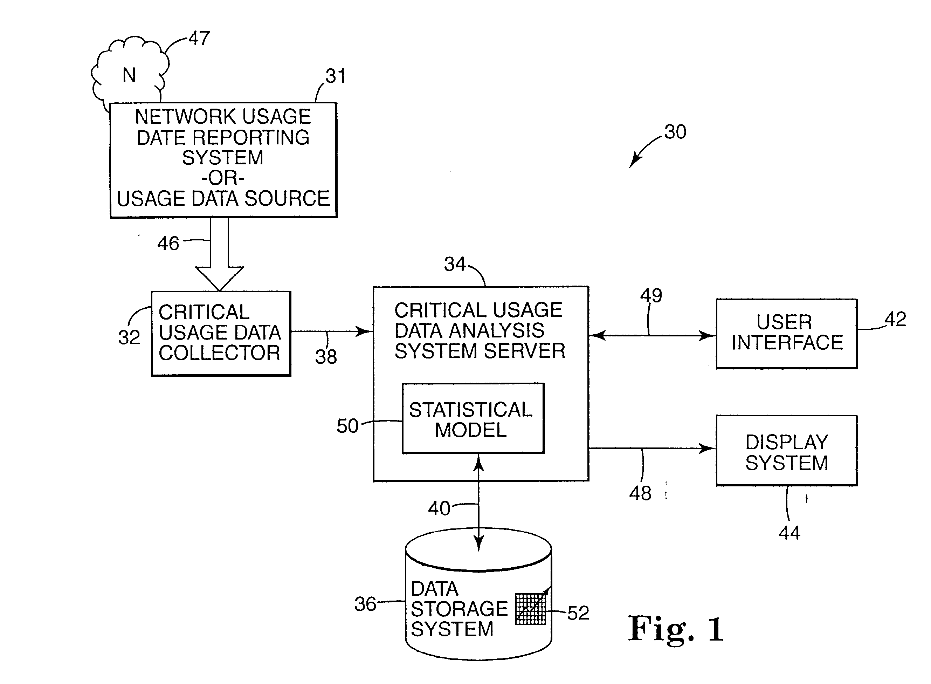

A network usage analysis system according to the present invention is illustrated generally at 30 in Figure 1. Network usage analysis system 30 includes several main components, each of which is a software program. The main software program components of network usage analysis system 30 run on one or more computer or server systems. In one embodiment, each of the main software program components runs on its own computer system.

Network usage analysis system 30 provides direct statistical representation of usage information that provides compact storage and real time, interactive usage analysis. The network usage analysis system 30 in accordance with the present invention provides for the use of statistical models and the storage of statistical data representative of critical usage data in lieu of storing the critical usage data, thereby allowing for real time interactive statistical analysis and greatly reducing usage data storage requirements. Since statistical models are stored and not the usage data itself, with the present invention the storage requirements do not grow with the amount of usage data. The storage requirements for the statistical models are a function of the complexity of the business to be modeled and the granularity of the desired results.

In one exemplary embodiment, network usage analysis system 30 includes a critical usage data collector 32, a usage data analysis system server 34 and a data storage system 36. Critical usage data collector 32 is coupled to usage data analysis system server 34 via communication link 38. Data storage system 36 is coupled to usage data analysis system server 34 via communication link 40. Network usage analysis system 30 further includes user interface 42 and display system 44. User interface 42 and display system 44 are coupled to usage data analysis system server 34 via communication links 49 and 48 respectively.

Critical usage data collector 32 collects critical usage data (e.g., a set of critical usage data) from usage data 46. Preferably, the usage data 46 is a real time stream of network usage data records. In one embodiment, the usage data 46 is a real time stream of IDRs generated from a usage data source or a network usage data reporting system 31, positioned on a network 47 (also indicated by an "N"). As used herein, a network usage data reporting system 12 is one type of usage data source. Alternatively, the IDRs may be received from a database or central data warehouse.

One network usage data reporting system suitable for use with the present invention is commercially available under the tradename SMART INTERNET USAGE 2.01 (SIU 2.01), from Hewlett-Packard, U.S.A. Other network usage data reporting systems suitable for use with the usage analysis system in accordance with the present invention will become apparent to those skilled in the art after reading the present application.

Usage data analysis system server 34 receives the critical usage data from the critical usage data collector 32 via communication link 38. In one aspect, the critical usage data collector 32 is separate from a network usage data reporting system, and in another aspect, the critical usage data collector 32 is part of a network usage data reporting system, such that the usage data analysis system server 34 receives the set of critical usage data directly from the network usage data reporting system. In another aspect, the critical usage data collector 32 is part of the critical usage data analysis system server 34.

The critical usage data analysis system server 34 uses the set of critical usage data to perform predetermined network usage statistical analysis. In particular, a statistical model 50 is defined for solving a network usage related business problem. The critical usage data analysis system server 34 uses the critical usage data and the statistical model 50 to generate statistical data 52. The critical usage data analysis system server 34 operates to store the statistical data 52 in the data storage system 36. In one aspect, the statistical data is stored in the form of a table (e.g., a distribution table).

After storage of the statistical model 50, the set of critical usage data is no longer retained. In one aspect, the critical usage data analysis system server 34 is responsive to the user interface 42 for interactive analysis of the statistical model 50. Further, a graphical display of the statistical model 50 can be output to display system 44. One exemplary embodiment of interactive analysis of critical usage data using the statistical model 50 is described in detail later in the application.

In one exemplary embodiment, critical usage data analysis system server 34 comprises a computer software program that runs on one or more computers or servers. Statistical model 50 can be stored as statistical data in the form of a table in data storage system 36. Data storage system 36 may comprise volatile memory (e.g., random access memory (RAM)) and/or non-volatile memory (e.g., a hard disk drive or other persistent storage device). User interface 42 may comprise a keyboard and/or mouse or other interface device. Display system 44 may comprise a video display device as known in the art.

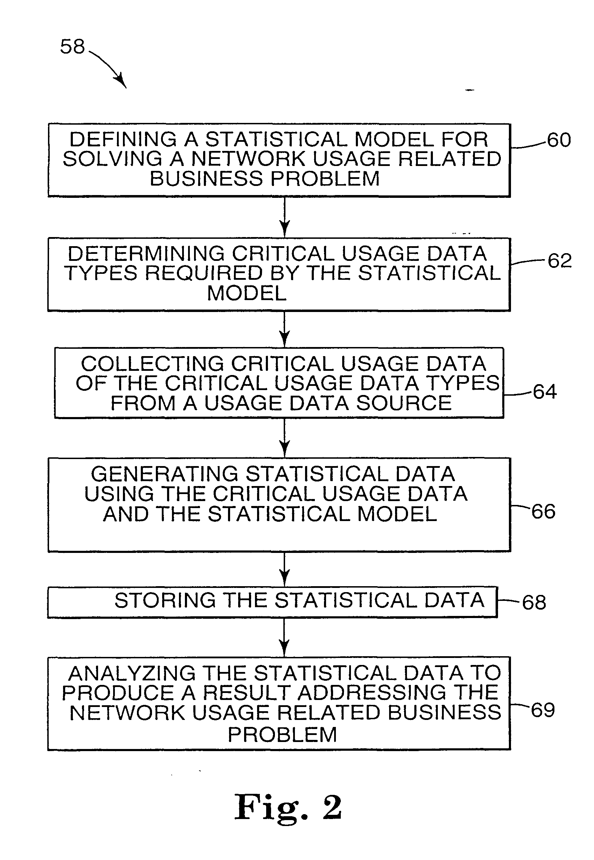

In Figure 2, a flow diagram illustrating one exemplary embodiment of a method for analyzing network usage according to the present invention is shown generally at 58. Reference is also made to Figure 1. In step 60, a statistical model is defined for solving a network usage related business problem. In step 62, critical usage data types required by the statistical model are determined. The type of statistical model chosen is based on the network usage related business problem to be solved. By defining only critical usage data types required by the statistical model, the volume of usage data that needs to be collected is greatly reduced.

In step 64, critical usage data 38 of the critical usage data types are collected from usage data 46 that can be generated from a network usage data reporting system or a usage data source 31. In one exemplary embodiment, the usage data 46 consists of a real time or real time stream of IDRs received from a network usage data reporting system. A real time stream of IDRs is defined as a stream of IDRs that is "flushed" or transferred from a data storage location at regular and frequent intervals (e.g., which may be substantially instantaneous or, based on the usage data source, from seconds to minutes). The critical usage data collector 32 collects critical usage data from the IDRs that may include a source identifier, a destination identifier, a usage metric (e.g., bandwidth, megabytes, time), a start date/time and end date/time. Exemplary defined usage data models for solving a network usage related statistical business problem are described in detail later in this specification.

In step 66, statistical data representative of the critical usage data are generated. In particular, statistical data are generated using the critical usage data and the statistical model. The step of generating the statistical data can be done in real time.

In step 68, the statistical data are stored. The statistical data may be stored in various forms, such as in the form of a table or graph in volatile or nonvolatile memory. After storing of the statistical data, the critical usage data can be deleted, since it is not necessary to retain it for the selected network usage related business problem. As such, storing of the statistical data representative of the collected critical usage data in lieu of storing the critical usage data itself greatly reduces data storage requirements.

In step 69, the statistical data can be analyzed to produce a result addressing the network usage related business problem. Also, the statistical data may be stored in volatile memory (e.g., RAM) to provide for interactive analysis and presentation of results pertinent to a network usage related business problem. The statistical data may be stored and/or archived in non-volatile memory, such as a hard disk drive. In particular, the statistical model is used to determine/analyze usage characteristics. The statistical model may also be used for performing interactive analysis of the critical usage data via user interface 42. In particular, the statistical model may include one or more variable elements, wherein the variable elements are changeable via user interface 42 to interactively model network usage. The statistical model results can be graphically or otherwise displayed using display system 44.

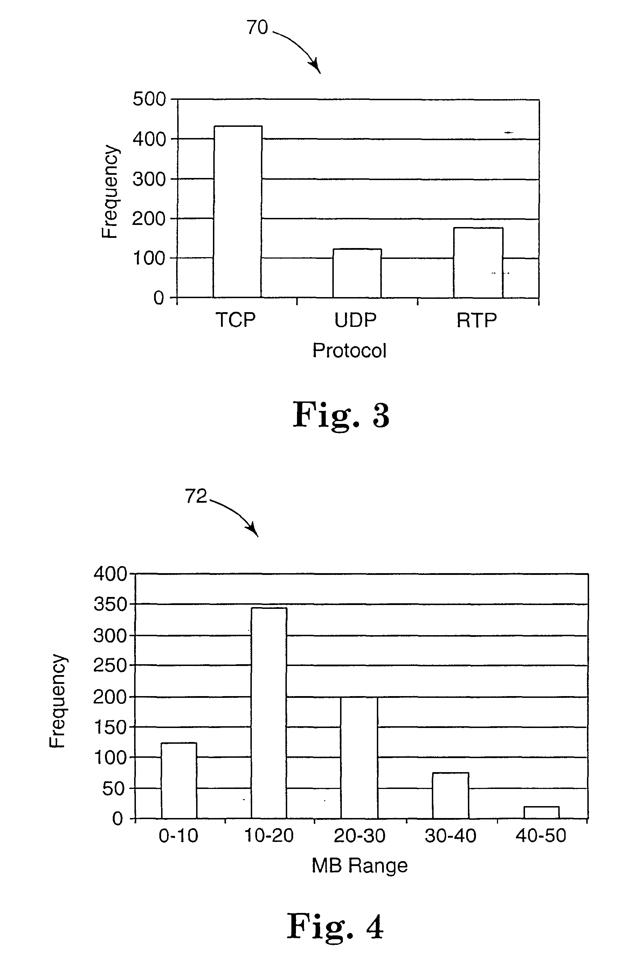

Figures 3-6 are graphs illustrating exemplary embodiments of statistical models that can be used in the network usage analysis system according to the present invention. These statistical models can be generated from critical usage data to show statistical data using a small set of predefined critical usage data types obtained from a stream of IDRs. The storing of the statistical data in tables for generating these statistical models is described in detail later in this application. In Figure 3, a histogram statistical model is shown at 70 representing the frequency of occurrence of a number of related events. The different types of events may or may not be part of a numerically ordered set. In the exemplary embodiment shown, the frequency of occurrence of different Internet protocol types is illustrated (e.g., transmission control protocol (TCP), user datagram protocol (UDP) and real time protocol (RTP).

In Figure 4, another type of histogram statistical model is illustrated, which is termed an ordered histogram 72. The ordered histogram 72 is a histogram that displays frequency of occurrence of an event as part of a numerically ordered set. In the exemplary embodiment shown, the frequency of occurrences of subscribers' total monthly usage is recorded in megabyte (MB) usage ranges is illustrated. The graph is generated by extracting the megabyte usage field from each IDR and tabulating the counts of such IDRs in bin ranges (0-10 MB, 10-20 MB, 20-30 MB, 30-40 MB and 40-50 MB). The totals for each bin range can be stored as statistical data in a table. The table is then further analyzed to generate additional information (the Statistical Model) that can then be used to generate various graphical results that are meaningful in the context of the chosen network usage related business problem.

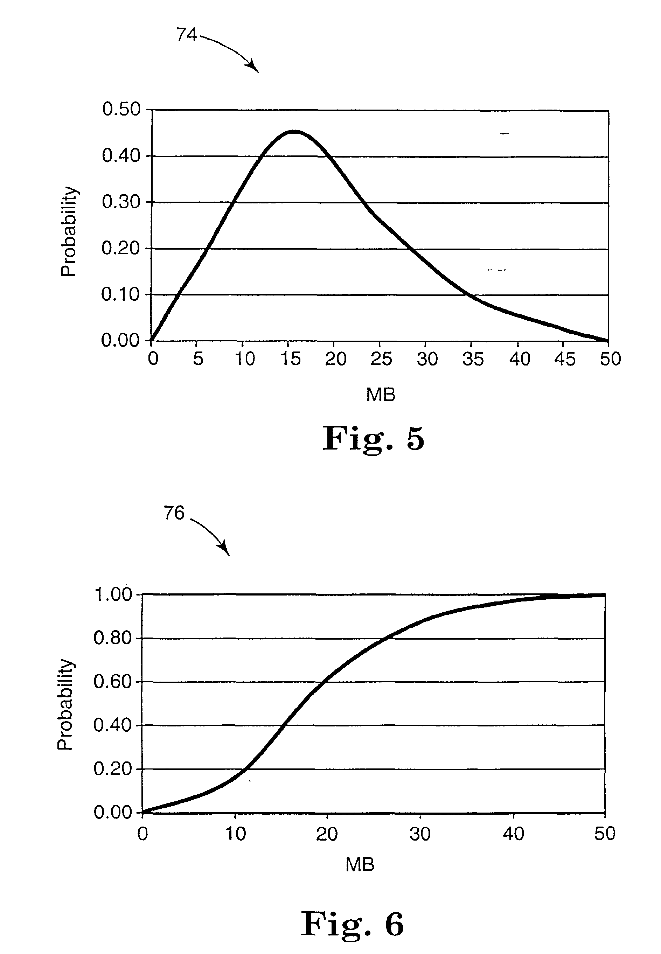

In Figure 5, a probability density function statistical model is illustrated at 74. The probability density function is similar to an ordered histogram, but the frequency data has been normalized so that the sum of the frequency events equals one. The functional notation $f(x)$ represents the y-axis. The probability density function 74 is generated using the ordered histogram data of Figure 4 and a smoothing function. As such, the probability density function has a similar shape as the ordered histogram of Figure 4, but is normalized so that

$$\int_{-\infty}^{\infty} f(x)dx = 1 \quad \text{for the continuous case}$$

$$\sum_{i} p_i = 1 \qquad \text{for the discrete case}$$

In Figure 6, a cumulative probability distribution function statistical model is illustrated at 76. The cumulative probability distribution function 76 is the integral of the probability density function. In particular, the cumulative probability distribution function 76 shown is the integral of the probability density function 74 of Figure 5.

In the statistical models, certain critical usage data types are treated as random variables (i.e., one or more variable elements). For example, the number of megabytes of usage in a particular IDR cannot be predicted and as such can be treated as a random variable. Similarly, the number of megabytes that a subscriber will use during a month (or other time period) is also quite unpredictable and can be treated as a separate random variable. Although both of these examples are measured in megabytes, the probability outcome spaces are different. The first example is a random variable of megabytes where the outcome space is all possible IDRs. The second example is a random variable of megabytes where the outcome space is all possible usage accumulations for a subscriber during a period of one month. The random variables can be utilized for performing interactive analysis of usage data using the statistical model. Exemplary embodiments of interactive analysis of critical usage data using statistical models is described in detail later in this specification.

One exemplary business question can be "within the outcome space of accumulated subscriber usage per month, what is the percentage of subscribers that use less than a threshold of T megabytes per month?" The term "final accounting record" (FAR) represents an IDR that represents all of the usage accumulations for a subscriber for a billing period, which is typically a month. The symbol $\alpha$ represents a random variable with units in megabytes. The subscript FAR is used for outcome space of final accounting records and the subscript IDR is used for outcome spaces that are not FARs. The symbol T is used to represent a threshold in megabytes.

As such, the business problem of determining how many of the service provider's subscribers use less than T megabytes per month is described in the following equation:

$$F_{FAR}(T) = P\{\alpha \le T\} = \int_{-\infty}^{T} f(x)dx$$

The integral form shown in the above equation is the definition of a cumulative probability distribution function and may be more familiar to the reader. The cumulative probability distribution function typically has an "s" shape as illustrated in Figure 6.

It follows that the probability density function can be derived as the derivative of the cumulative probability distribution function, as illustrated in the following equation:

$$f(x) = \frac{d}{dx} F(x)$$

Other useful statistical models include a 24-hour profile, which is an ordered histogram of the usage traffic density for a 24-hour period (e.g., each hour of a 24-hour day), and a top ten list, which is a list of the top ten heaviest users during a period of time. Other useful statistical models may include descriptive statistics such as the mean, variance, and standard deviation. Additional statistical models suitable for use with the present invention will become apparent to those skilled in the art after reading the present application.

Business Model Problem Example

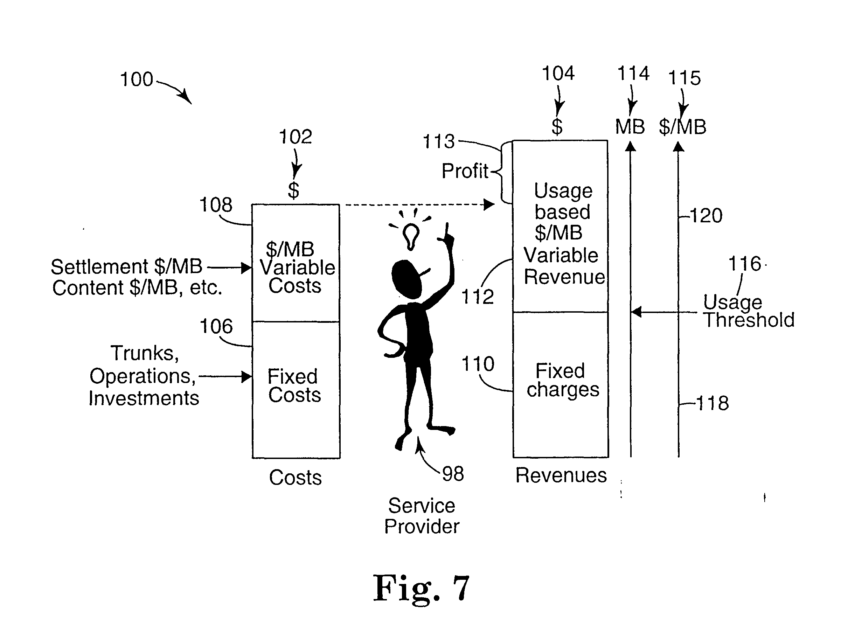

In Figure 7, a diagram illustrating one exemplary embodiment of a simple financial model of usage-based billing for a typical service provider utilizing the network usage analysis system according to the present invention is shown at 100. The network usage analysis system is utilized by defining statistical models for solving the network usage related business problem illustrated. The simple financial model 100 is detailed herein as part of a business model for an Internet service provider (ISP), represented generally at 98, but could also apply to other service providers (e.g., a company department managing an intranet network).

Once a decision has been made to move to usage-based billing, an ISP business manager needs to determine how to apportion the revenue streams into fixed charges and usage based charges. The trade-off is the guarantee of an annuity for income, versus the ability to attract new customers with a low base rate. Other factors, such as behavior modification of heavy users also come into play.

Usage-based billing business model 100 includes service provider costs 102 and service provider revenues 104. Costs 102 include two components. The first component is the fixed costs portion 106 and the second component is the variable costs portion 108. The fixed costs portion 106 represent costs that are short-term independent of subscriber usage, such as operational running costs, the cost of communication trunks (T1s, T3s, etc.) and investment costs (e.g., amortization cost of the ISP infrastructure). Variable costs 108 include settlement charges or premium content charges that the ISP pays per megabyte used and are a direct result of subscriber usage.

ISP revenues 104 also include two components. The first component is the fixed revenue portion 110 and the second component is the variable revenue portion 112. The fixed revenue portion 110 is the component of a subscriber's bill before any usage charges are added (e.g., before the subscriber's usage exceeds a predefined usage threshold). The variable revenue portion 112 results directly from a subscriber's usage fees attributed to usage above the allotted threshold. Profit 113 is the portion of the total revenues 104 that exceeds the total costs 102.

Table 1 is a hypothetical example of costs 102 and revenues 104 for ISP 98 using the simple financial model 100.

## Table 1 Hypothetical income statement using simple financial model

| COSTS | | | REVENUES | | |
|---|---|---|---|---|---|
| **Fixed** | | | **Fixed** | | |
| Amortization | $320,000 | | Subscribers | 100,000 | |
| Operating Expenses | $600,000 | | $/Subscriber/Month | $12 | |
| Trunk Costs | $200,000 | | *Total Fixed Revenues* | $1,200,000 | |
| *Total Fixed Costs* | $1,120,000 | | Threshold (MB) | 40 | |
| **Variable** | | | **Variable** | | |
| | | | Average XS MB / Subscriber | 30 | |
| $/MB Costs | $0.10 | | XS MB Fees $/MB | $0.27 | |
| MB/mo | 6,000,000 | | Avg Var Fees / Subscriber | $8.10 | |
| | | | Total XS MB | 3,000,000 | |
| *Total Variable Costs* | $600,000 | | *Total Variable Revenues* | $810,000 | |
| **Total Costs** | $1,720,000 | | **Total Revenues** | $2,010,000 | |

| | | |
|---|---|---|
| **Profits** | $290,000 | |
| **Margin** | 14% | |

In this example, the amortization represents the monthly cost of an initial $10,000,000 investment over 36 months at 10%. Further, the following assumptions were made: the fixed subscriber fee of $12/mo includes a pre-allocated usage threshold of 40 MB; ISP 98 is providing only one service; and all subscribers are given the same plan, there are no tiered classes of subscribers.

If there were no threshold (T=0) the service provider's revenue and profit could easily be calculated as follows:

$$Revenue = \sum_{U_k}\left[ MB_{U_k} \right]* R + FixedFee * U_T$$

where

$MB_{U_k}$ = Megabytes for User $k$ for the period
$R$ = Rating factor in $/MB
$U_T$ = Total users (subscribers)

$$Profit = Revenue - FixedCost - MB_{Tvar} * R_{Cost}$$

where

$FixedCost$ = Fixed cost of the ISP per period
$R_{Cost}$ = $/MB cost factor
$MB_{Tvar}$ = Total MB (variable cost) subject to $R_{Cost}$

However, most subscribers like getting a certain amount of service included with their fixed monthly fee. As such, ISP plans can have a threshold of service that is included with the fixed portion of their fees. For example, the first 40 megabytes of usage each month may be included in a fixed fee, setting the threshold equal to 40 megabytes.

In reference again to Figure 7, vertical axis 114 represents megabytes of usage. A usage threshold is indicated at 116, the maximum amount attributable to fixed revenue 110. The level of the usage threshold 116 can symbolically represent two values, the revenue from the fixed charges (along vertical axis 104) as well as the megabyte level beyond which a subscriber would pay usage charges (along axis 114). The vertical axis 115 represents revenue dollars partitioned into two segments rated at two different $/MB rates. The first segment 118 is the portion below the usage threshold 116, which has a dollars/MB scaling factor of subscriber fixed fee per month divided by the allocated MB usage per month. The second segment 120 is the portion above usage threshold 116 that includes an independent scaling factor of dollars/MB for over-the-threshold charges.

The network usage analysis system in accordance with the present invention is utilized for generating statistical models to solve the ISP's Internet network usage related business problem. In particular, by utilizing business model 100, a service provider can adjust risks via interactive analysis based on many market factors and have the benefits of usage metering (and billing) by varying, for example, the following three values: the fixed charge per month per customer; the usage threshold in megabytes, where usage charges (dollars/MB) begin; and the dollars/MB charge for usage over the usage threshold.

Computation of revenues using a threshold.

In a business model without a usage threshold, the total revenues can be computed simply from multiplying the average usage of all the subscribers for the month times the number of subscribers. With a business model having a usage threshold, determining/setting the usage threshold and the dollar/MB rate is more complex. The network usage analysis system in accordance with the present invention determines the excess (XS) megabytes from the statistical model. Once this value is known, computing the total revenue for the service provider is straightforward as will be examined in detail later in this application.

Accumulation Table Approach

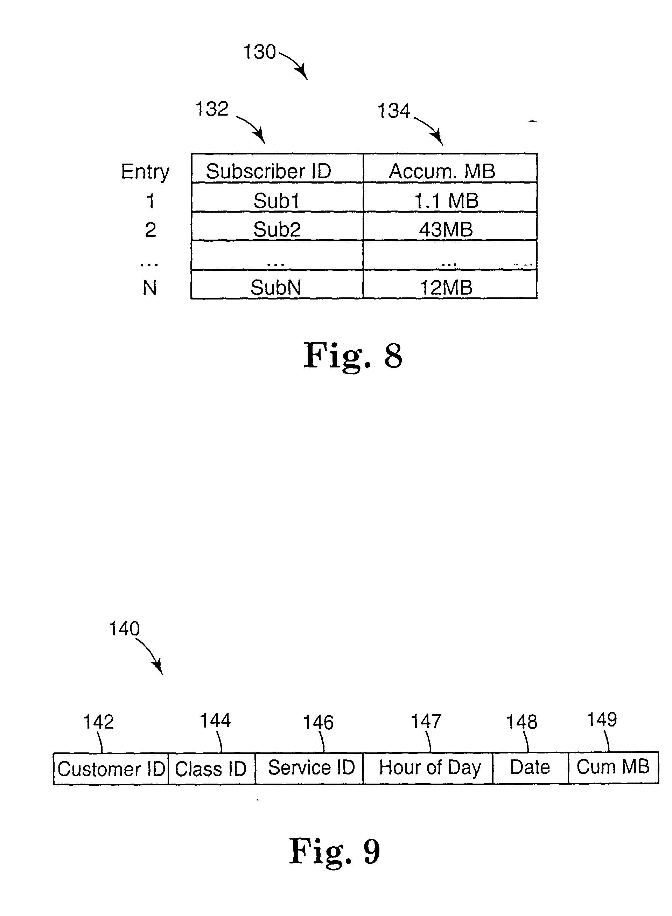

In Figure 8, an accumulation table is generally shown at 130. The accumulation table 130 provides for tracking statistical data corresponding to the accumulation of usage for each subscriber during an accounting period, which is usually a month. The accumulation table 130 can be stored in volatile memory (e.g., RAM) or in nonvolatile memory or other persistent storage device. The size of the accumulation table 130 depends on the granularity of detail desired in a particular situation. In the present example, there is only one dimension, subscribers, so the table size corresponds directly to the number of subscribers.

The storage requirements for an accumulation table 130 are minimal. Assuming a single 32-bit integer subscriber ID tag and a 32-bit integer accumulation register, a simple 100K-subscriber accumulation table would consume 800 KB.

In the exemplary embodiment shown, accumulation table 130 includes a subscriber identification (subscriber ID) column 132 and an accumulated megabyte (Accum. MB) column 134. As such, column 132 includes an entry for each subscriber ID, and column 134 includes the accumulation of usage in megabytes corresponding to each subscriber ID.

An accumulation table increases in size with the number of active customers or subscriber IDs during a period, but cannot grow beyond the total number of customers. The granularity of the accumulation table needs to support the number of dimensions of detail desired in any output results. The size of the table is smaller by the number of active customers that would actually register traffic during an accounting period. As such, the long term accumulation of usage for individual customers can be tracked using a network usage data reporting system (as previously described herein) wherein the accumulation statistical data (e.g., in the form of IDRs) may include the structure of Figure 9 as shown generally at 140. accumulation table 140 includes a customer ID column 142, a class ID column 144, a service ID column 146, an hour of day column 147, a date column 148 and a cumulative megabyte (Cum. MB) column 149.

For example, a potential size of accumulation table 140 where hourly resolution is required for a time period of thirty days is as follows. Assuming each field is a 32-bit integer with the exception of the cumulative megabyte column 149 field, which is a 64-bit double, the row totals 28 bytes. As such, assuming 100,000 subscribers, with 10% active during any one hour, The accumulation table would be approximately 280 KB for the current hour storage, 6.72 MB for the past 24 hours, and 201 MB in storage requirements for the past 30 days.

In reference again to Figure 8, the revenue is computed as follows:

$$Revenue = \sum_{U_k} \left[ MB_{U_k} - T \right]_{if > 0} * R + FixedFee * U_T$$

where

$MB_{U_k}$ =      Megabytes for User $k$ ($U_k$)
$R$ =      Rate for usage charges over the threshold T in \$/MB
$U_T$ =      Total number of users (subscribers)
$T$ =      Threshold in MB
$FixedFee$ =      The base fixed fee (\$/MB) per subscriber per month.

At the end of the period the threshold ($T$) is subtracted from the total MB for each user. If this value is greater than zero, then the difference is multiplied by the rating factor and then added to the fixed fee per month. If this value is less than zero then the revenue from this subscriber is just the fixed fee. The total revenue for the ISP is the sum of these results for all customers.

Assume we had an accumulation table of 100,000 subscribers with an upper bound of 50 MB and wanted to find the excess MB over a threshold of 25 MB. There are various approaches: One simple approach would apply the above equation to every entry of the accumulation table for a chosen threshold value making a decision at each subscriber entry whether to add to the sum or not.

This approach has a computational overhead of having to completely scan the table every time a new value of $T$ is selected or if the accumulation table gets updated.

Distribution Table Approach

Dealing directly with the large accumulation table previously described herein (in reference to Figure 8) is cumbersome and slow. The present invention provides for substantially reducing the time required to obtain the desired result by generating statistical data, giving up specific information about each individual subscriber, but retaining the ability to compute the probability of a subscriber exceeding T megabytes. This is accomplished by constructing a small table (e.g., 50 entries) with some statistics computed from the accumulation table.

A reasonable upper bound (UB) for the MB used by any individual subscriber for the period is established.

The consequences for getting this value wrong are not too serious. If the value is too high, the resolution of the statistical profile will be reduced. If the value is too low, the top bucket of the table will show a big spike, which would be readily apparent. Furthermore, in deployment of this method, the program could be adaptive to the UB and adjust it based on history. To construct an example, let us suppose the entries in our large Accumulation Table ranged from 0 to 50MB for the period.

Creating the Distribution Table by Scanning

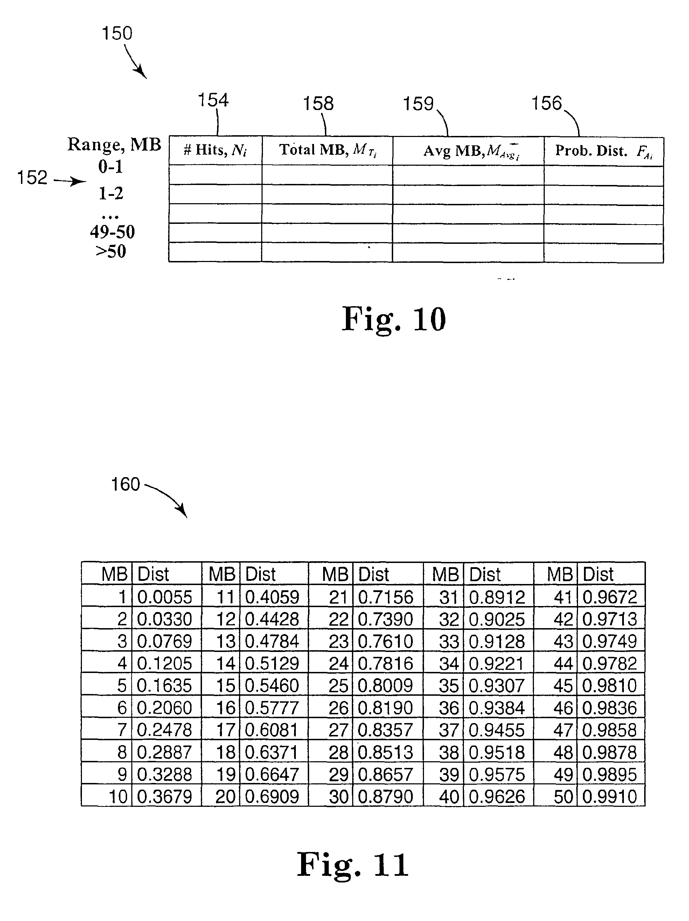

Referring to Figure 10, one exemplary embodiment of a distribution table 150 is shown. Distribution table 150 stores statistical data representative of the accumulation Table of Figure 9. The accumulation table 130 (of Figure 8) is scanned once to create a small, ordered histogram of 50 bin counters 152 where the first bin represents number of subscribers with MB usage in the range 0-1MB, the second bin 1-2MB, and so on. For each subscriber entry in the accumulation table 130 the histogram bin is selected based on that subscriber's MB value and then add one to the histogram bin. This represents the number of hits, $N_i$ for that MB range, indicated at 154.

While we are computing the $N_i$ values from a single scan of the accumulation table 130, we can also take the actual MB value for each subscriber and add it to column 158. This creates a column 158 with the total of the MB for all subscribers that fall within each bin range. This column is called $M_T$. The column $M_{Avg}$ is the average value for each bin range 152, or

$$M_{Avgi} = \frac{M_{T_i}}{N_i}$$

Computing the cumulative probability distribution function from the column $N_i$ creates a forth column 154 $F_A$ (indicated as Prob. Dist. $F_{A_i}$). The MB values from the large accumulation table are treated as random variables. Let $x$ represent MB for the continuous case and $i$ be the table row index for the discrete case. The symbol $\alpha$ represents the random variable of megabytes as before. The outcome space is $A$ for accumulated megabytes for a period. All the possible outcomes for a particular trial of the random variable $\alpha$ are all the entries in the accumulation table. The accumulation table is not linearly ordered by MB, nor is it normalized.

The process of filling in the 50-entry histogram creates the distribution table that is linearly ordered by MB. The cumulative probability distribution function is computed (from column $N_i$) as

$$F_A(T) = P\{\alpha < T\} = \frac{\int_0^T N(x)dx}{\int_0^{UB} N(x)dx} = \frac{\sum_{i=1}^{n(T)} N_i}{\sum_{i=1}^{n(UB)} N_i}$$

where

$T =$ Threshold in MB
$N_i =$ # of hits in band $i$
$N(x) =$ Smoothed or continuous version of $N_i$
$UB =$ Upper Bound in MB
$n(UB) =$ index of band containing Upper Bound (table size)
$n(T) =$ index of band containing $T$

An array of 50 values for the distribution function is large enough to produce graphics and yet small enough for tweaking for analysis purposes. To appreciate the power of this simple table it is useful to consider these values as 50 parameters that fully describe the MB distribution of a class of subscribers' total usage per month. These values can also be considered as analogous to 50 coefficients of a polynomial of order 50. However, other table sizes can be selected.

In Figure 11, a sample cumulative probability distribution function table is shown at 160. The cumulative probability distribution function table 160 is a fifty-entry table of a sample distribution. From this sample distribution, the percentage of subscribers exceeding 25MB usage for the period would be:

$$1 - F_A(25) = 1 - P\{\alpha < 25\} = 1 - .80 = 20\%$$

This information is valuable to the business manager. Setting a threshold at 50MB would impact < 1% of the subscriber population and would be hardly worthwhile. Setting a threshold at 5MB would impact ~84% of the population but may conflict with other customer care objectives, such as customer satisfaction. No matter what threshold the manager chooses, however, an additional piece of information may be desired to reasonably set the usage threshold and the $/MB rate for MB exceeding the threshold: the total estimated excess megabytes above the threshold.

Computation of Excess MB

The excess MB (XS). given a threshold value T, can be computed from the table as the sum:

$$XS = \sum_{i=1}^{n} N_i \left[ M_{Avg_i} - T \right]_{if>0,\, else\, 0}$$

where

$XS$ = Excess MB
$n$ = Number of table entries
$N_i$ = Frequency of occurances in the half-open interval

$$\left( \frac{i-1}{P} UB, \frac{i}{P} UB \right]$$

$UB$ = Upper Bound in MB
$T$ = Threshold in MB

For a small table of 50 values, the above computation is straightforward.
The storage requirements for the distribution table of Fig. 11 would be approximately 1400 bytes. Longer-term persistence is accomplished with very modest sized files or a database.
Computing the revenue is by the following equation:

$$Revenue = XS * R + FixedFee * U_T$$

where

$U_T$ = Total number of Users (subscribers),
$XS$ = Excess MB usage for all subscribers for the month,
$R$ = Rate for usage charges over the threshold T in $/MB
$FixedFee$ = The base fixed fee ($/MB) per subscriber per month.

The ISPs profit for the business model is computed using the same previous equation:

$$Profit = Revenue - FixedCost - MB_{Tvar} * R_{Cost}$$

where

$FixedCost$ = Fixed costs of the ISP per period
$R_{Cost}$ = $/MB cost factor
$MB_{Tvar}$ = Total (variable cost) MB subject to $R_{Cost}$

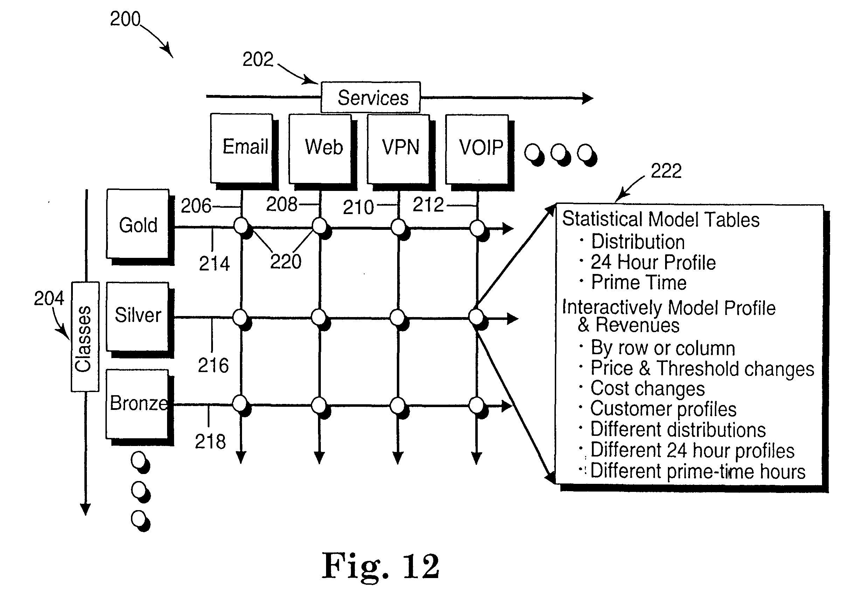

In Figure 12, one exemplary embodiment of a complete business model of an Internet service provider having multiple subscriber classes and providing multiple services is shown at 200. In particular, business model 200 includes services 202 along a horizontal axis and classes 204 along a vertical axis. The business model 200 is in matrix form, with example services 202 including e-mail 206, web 208, VPN 210 and VOIP 212. Exemplary classes 204 include gold class 214, silver class 216 and bronze class 218. The intersection of each service 202 and class 204 can be termed a "node" 220. The network usage analysis system 30 in accordance with the present invention collects critical usage data corresponding to each of the nodes 220 enabling multiple financial views into the Internet service provider's total business based on cost and revenue model parameters previously discussed herein, as well as storing statistical data upon which these financials are computed, indicated at 222.

In one aspect, at each node 220 the network usage analysis system 30 in accordance with the present invention provides the following statistics:

1. Usage distribution and density curves for the population (e.g., in megabytes).

2. Time-based, usage traffic profiles (e.g., megabytes over a 24 hour period).

3. Top-10 lists.

4. Descriptive statistics including mean and standard deviation.

Each node may further include key parameters related to the financial model such as cost factors and rate factors. Other useful statistical data, which can be available at each node, will become apparent to one skilled in the art after reading the present application.

The multi-dimensional statistical model 200 can be used to interactively model profits and revenues for various services 202 and classes 204 combinations. In particular, the critical usage data at each node can be then summed either horizontally or vertically to provide multiple views of the Internet service provider's business, including the service provider totals by service or by class; the revenues and profits for a particular class of subscribers (a horizontal stripe); the revenues and profits for a particular service (a vertical stripe); and the revenues and profits for an intersection of a subscriber class and a service class (at a particular node 220).

Financial computations can now be made for the Internet service provider as a whole. $FixedFee_{ISP}$ represents the opportunity to charge a base fixed fee for all subscribers independent of what additional services they elect. The fixed portion of a subscriber's fee would be the base fixed fee plus the fixed fees associated with each elected service. On the cost side, $FixedCost_{ISP}$ represents the total fixed costs of the ISP including amortization costs, salaries, and fixed communications services. The $FixedCost_{S_j}$ represents the similar costs for each added service.

Vertical, horizontal or intersection equations can be derived by holding one or more of the variables constant.

$$Revenue_{ISP} = FixedFee_{ISP} * U_T +$$
$$\sum_{C_i} \sum_{S_j} \sum_P \left[ FixedFee_{C_i,S_j,P} * U_{TC_i,P} + XS_{C_i,S_j,P} * R_{C_i,S_j,P} \right]$$

where

$FixedFee_{ISP}$ = Base Fixed Fee for access for all subscribers, \$/period
$C_i$ = Subscriber Class $i$
$S_j$ = Service $j$
$P$ = Prime-time index

$$Profit = Revenue_{ISP} - FixedCost_{ISP} - \sum_{S_j} \left[ FixedCost_{S_j} - MB_{Tvar_{S_j}} * R_{Cost_{S_j}} \right]$$

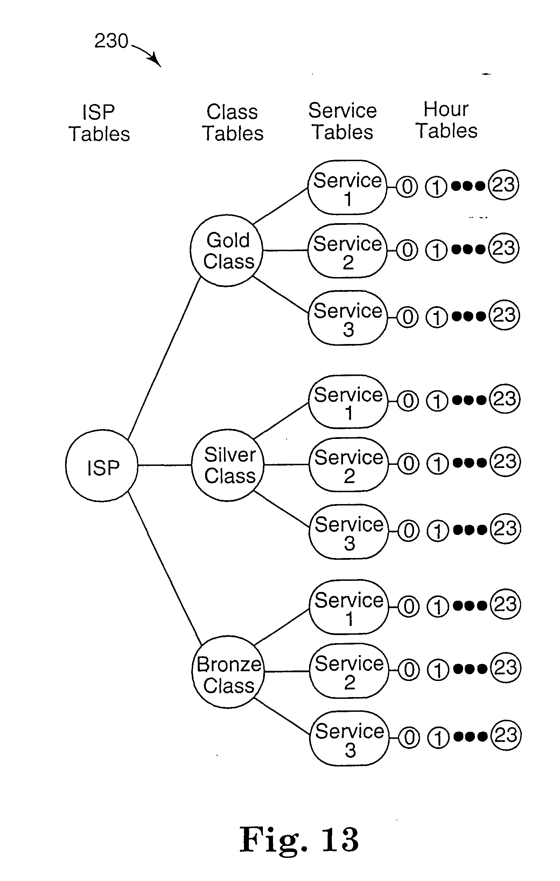

In one exemplary embodiment, business model 200 is stored using a multi-dimensional data structure. In Figure 13, one exemplary embodiment of a multi-dimensional data structure for use with the present invention is generally shown at 230. This diagram is drawn for a sample Internet service provider having three classes of subscribers and three different services with an hourly resolution for prime time and/or other statistical reporting. Each level of the hierarchy contains different types of tables for collecting statistics using critical usage data from an IDR stream. Other types of multi-dimensional data structures are contemplated and will be apparent to one skilled in the art after reading the present application. For example, a flat hash table may be used where the hashing function would be a simple concatenation or combination of all of the necessary dimension variables. For example, a table may be needed to be stored in three dimensions: class, service, hour-of-day. Using a concatenated hash function, the tables for class=gold, service =Web, HcD=12 could be located by:

$$location = hash("GoldWeb12").$$

The following table describes different types of tables and the association with the level in the hierarchy.

Table 5

| Table types: | | | |
|---|---|---|---|
| **Table Type** | **Association** | **Nominal Size** | **Comments** |
| Accumulation (Note that this table is only required for financial accounting. It is not necessary for operations type traffic reporting.) | The lowest level branch where XS MB needs to be tracked determines granularity. Example: Class-Service-PT/NPT | #active cust x 2 (cust ID, accum.) | Different policies: Updated with every usage event. Cleared at end of period |
| Distribution | At the lowest level branch where XS MB needs to be tracked. Class-Service-PT/NPT | 50 x 4 ($N_i$, $F_A$, $M_T$, $M_{Avg}$) | Some columns updated in real time, others are computed as required. |
| Profile | Class-service | 24 x 2 ($N_i$, $M_T$) | |
| PT/NPT options | Service | 24 boolean values x 7 days | |
| Top Ten | ISP, Class, Class-Service, Class-Service-PT/NPT | 10 x 2 (UserID, UsageMB) | |
| Rating | Class-service-PT/NPT | 3 values (fixed rate, Threshold, $/MB rate) | |
| Class weighting & population statistics | Class | 3 values (Total FARs / period, Total MB/period, Class population | Could be optionally stored at root as #classes x 3 Updated in real time |
| Service weighting | Class nodes | #services x 2 (Total FARs/period, Total MB/period) | Updated in real time. |
| ISP Cost | ISP root | 1 value Amortized cost per period (day, mo) | |
| Service Cost | Service | 2 values amortized cost per period (day, mo) $/MB cost | |

Other statistics and table structures suitable for use with the present invention will become apparent to one skilled in the art after reading the present application.

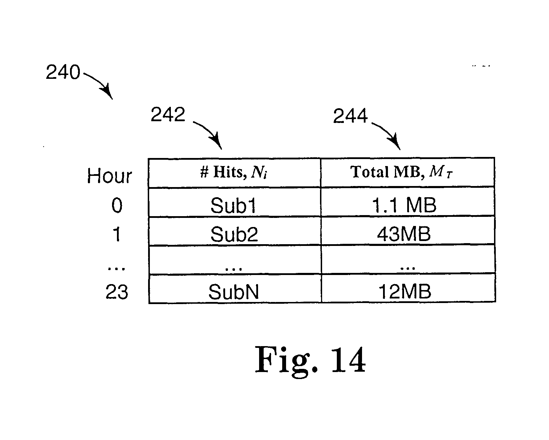

Other statistics that may be maintained and are suitable for use with the present invention include profile statistics and prime time statistics (e.g., prime time (PT) and non-primetime (NPT) statistics). In Figure 14, a table illustrating a method of storing 24-hour profile Statistical data is shown at 240. In one aspect, the profile provides a 24-hour view of traffic for a class of users or for a particular service. Table 240 includes first column 242 indicating the number of hits in each hour (indicated by # Hits, $N_i$), and second column 244 indicating the total number of megabytes associated with the hits for each hour (indicated by Total MB, $M_T$. In particular, as critical usage data is collected, a 24-hour entry profile table accumulates the total megabytes from each critical usage data record and by the hour of the critical usage data record. The table 240 is updated at the same time that an accumulation table is updated. The profile table 240 could be managed depending on what the service provider wants to see. For example, the table 240 could be managed according to accumulations per hour since midnight. Alternatively, the table could be managed as a rotating 24-hour table that always reflects the last 24 hours, or the accumulations of each hour for some period of time, e.g., a day, a week, or a month.

For each service that an ISP offers, specified hours during the day and on specified days would be designated as prime time hours. This information could be saved in a configuration table associated with each service. In addition, there could be additional data so that prime times on special days and holidays would be properly accumulated according to the service provider's policies. In financial applications there would also be additional rating information required as the business manager may want to establish separate fixed fees, thresholds, and $/MB for prime time (PT) and non-prime time (NPT).

There are several ways that prime time can be monitored. The approach will depend on the business policies and objectives of ISP in terms of prime time. Three examples are shown in the following table:

| Objective | Storage required | Cons |
|---|---|---|
| 1. Monitor PT/NPT traffic | • 2 x 2 table: $N_i,M_T$ per class-service | Cannot discriminate $ for PT vs. NPT |
| 2. Monitor PT/NPT traffic & $. | • 2 distribution tables (2 x 50 x 4) per class-service. | Cannot model impact of different PT / NPT options. |
| 3. Monitor PT/NPT traffic & $ and model PT/NPT changes. | •24 distribution tables (24 x 50 x 4) per class-(24 x 50 x 4) per class-service. | Must have granularity in Accumulation Table for each hour of the day. |

Setting of prime-time hours is usually associated with a specific service as opposed to a specific class of subscribers. Different classes of subscribers, however, may have different access privileges to prime time hours for a particular service.

If option 2 or 3 from the above table is chosen then revenue can be computed as follows:

$$Revenue = \sum_{P} \sum_{i} \left[ XS_{P,i} * R_P + FixedFee_P * U_P \right]$$

where

$P =$     Prime (PT, P=1) or Non-Prime-Time (NPT, P=0) service
$i =$     index of PT or NPT hours
$U_P =$     # of Users with access to the P service

This has the flexibility to establish a separate fixed fee for prime-time hours. $U_{P=1}$ would represent the number of subscribers who have access during prime-time hours; $U_{P=0}$ would represent the number of subscribers who have access during non-prime-time hours, which would presumably be all users of that class that have access to the service being accessed. Suppose prime time was 08:00 through 16:59 hours. The index i would have the values 8 to 16 for prime time and the values 0-7, 17-23 for the non-prime-time hours.

Top-10 calculations have some similar constraints as the revenue calculations. Individual subscriber accumulations would have to be maintained for the relevant period before the Top-10 could be finalized. Fortunately, the same accumulation tables that are maintained for the revenue calculations could also be used for the Top-10. This invention would keep a current Top 10 list that could be continuously updated after every IDR entry into the accumulation table, or it could be computed at the end of the period.

Off-line Business Analysis

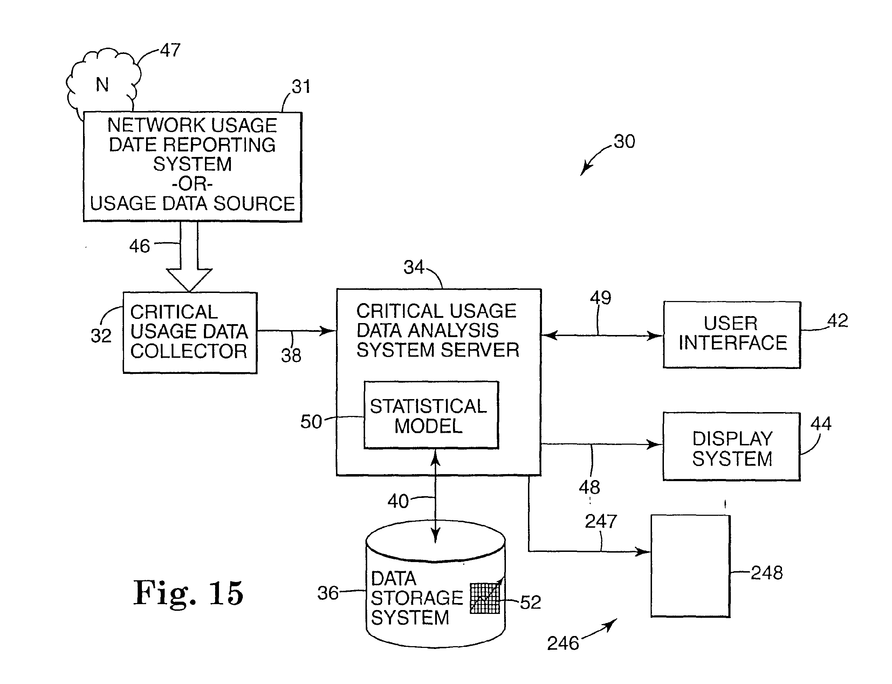

With the present invention, the information contained in these distribution tables can be utilized to enable the ISP to interactively model the business even when the Internet usage analysis system is not connected to the network and actively collecting critical usage data. In Figure 15, a block diagram is shown illustrating one exemplary embodiment of a network usage analysis system having off-line business analysis in accordance with the present invention using a client-server model 246. The usage data analysis system server 34 does real time critical usage data collection and generating of statistical data to create statistical models. The statistical models are downloaded via communication link 247 to an Internet usage analysis system client 248, when requested, for off-line analysis. In one embodiment, client 248 is a computer.

Interactive analysis using the present invention provides several advantages. Using the tables collected on-line, a business manager could test new pricing, cost or prime time assumptions off-line from a laptop computer. For example; for a class of subscribers, vary the fixed price, the threshold, or the $/MB rate or any combination in order to simulate what effect these change have on revenues and profits for a service, a class, or the ISP as a whole. It would be desirable to do this off-line. For a service, the prime time hours or the cost model assumptions could be varied.

When adding a new service, there is no historical data. Tables from similar services could be copied and tweaked to create "what-if" scenarios that could set boundaries on revenues and profits based on subscriber take-up assumptions, profiles and usage distributions.

These analysis situations are straightforward since the analysis routines is performed on the tables whether the system is online or offline. The striking difference with the Internet usage analysis system in accordance with the present invention is that these "what-if" scenarios can be tested interactively.

The Internet usage analysis system can be applied to operational purposes as well (e.g., monitor operational data).

Outcome Spaces for IDRs

As mentioned previously, understanding the outcome space is critical when making decisions based on distributions of random variables. For this discussion, let's consider the outcome space to be an IDR that is not a FAR.

For example, IDRs may be generated at any stage of aggregation and might represent an accumulation of 5 minutes of usage, or 1 hour, or 1 day. When used for billing purposes, these IDRs must be accumulated into a FAR that would represent the total usage for the subscriber for the month, which is the normal billing period. (It does not matter where this final accumulation takes place.) It is this FAR that is used to create the billing statement for the subscriber.

Collecting Operational Statistics

To create useful operational statistics the IDRs must have a fine enough grain for useful graphical interpretation. Aggregation intervals of 5 minutes to 1 hour would be typical.

The IDRs would be fed directly into the distribution tables. The same hierarchical business model would still be used to measure the distribution of the IDRs at each node of the business model. The resulting statistics derived from such a collection model would include IDR, MB, or volume or duration distributions for the ISP as a whole, for each class, for each service and for each class-service. From these distributions one could determine the probability of the MB within an IDR exceeding a certain size, the probabilities of a duration within an IDR exceeding X minutes, etc. Twenty-four hour IDR traffic profiles for the ISP as a whole, for each class, for each service and for each class-service could also be determined.

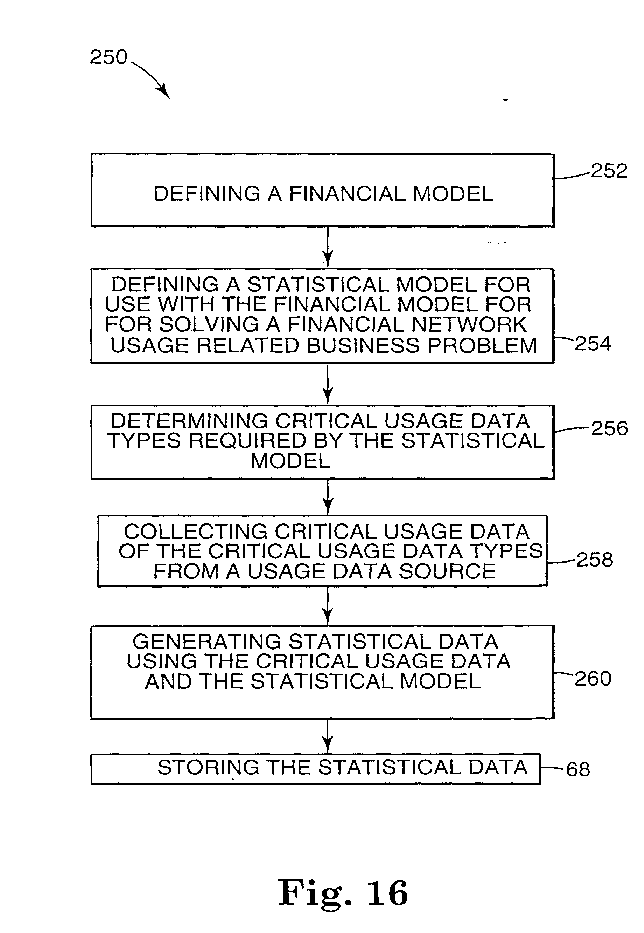

In Figure 16, a flow diagram is shown at 250 illustrating one exemplary method for analyzing network usage, including financial analysis of a network service provider, in accordance with the present invention. In step 252, a financial model is defined. In step 254, a statistical model is defined for use with the financial model for solving a financial network usage related business problem. In step 256, critical usage data types are determined that are required by the statistical model. At 258, critical usage data is collected of the critical usage data types from a usage data source. In step 260, statistical data is generated using the critical usage data and the statistical model. In step 262, the statistical data is stored.

The method may further include the step of analyzing the financial model and statistical model including the statistical data to produce a result addressing the financial network usage related business problem.

In one aspect, the step of defining a statistical model includes the step of defining a histogram, and the step of storing the statistical data includes the step of storing the statistical data in an accumulation table. The step of defining a histogram includes the step of defining the histogram to include subscriber-accumulated usage in predefined megabyte ranges. The step of defining a statistical model may include the step of defining an ordered histogram. The method further includes the step of generating an ordered histogram using the statistical data stored in the accumulation table and stored in the ordered histogram in a distribution table. In one aspect, the step of defining a statistical model further includes the step of defining a cumulative probability distribution. The method further includes the step of determining the cumulative probability distribution using the ordered histogram. The cumulative probability distribution is stored in the distribution table.

In one aspect, the method further includes the step of determining revenue using the distribution table in the financial model. In another aspect, the method includes the step of determining profit using the distribution table and the financial model.

In one embodiment, the step of defining a statistical model includes the step of defining a multi-dimensional statistical model corresponding to the financial model. The step of storing the statistical data includes the step of storing the statistical data in a multi-dimensional data structure. The method may further include the step of modeling the network service provider using the multi-dimensional data structure, including defining the statistical model to include a variable element. The variable element is changed for interactive financial analysis of the network service provider.

Although specific embodiments have been illustrated and described herein for purposes of description of the preferred embodiment, it will be appreciated by those of ordinary skill in the art that a wide variety of alternate and/or equivalent implementations calculated to achieve the same purposes may be substituted for the specific embodiments shown and described without departing from the scope of the present invention. Those with skill in the chemical, mechanical, electro-mechanical, electrical, and computer arts will readily appreciate that the present invention may be implemented in a very wide variety of embodiments. This application is intended to cover any adaptations or variations of the preferred embodiments discussed herein. Therefore, it is manifestly intended that this invention be limited only by the claims and the equivalents thereof.

**Claims**

1. A method for analyzing network usage (58) comprising:

   defining a statistical model (50) for solving a network usage related business problem (60);
   determining critical usage data types required by the statistical model (62);
   collecting critical usage data (32) of the critical usage data types from a usage data source (64);
   generating statistical data (52) using the critical usage data and the statistical model (66); and
   storing the statistical data (68).

2. The method of claim 1, further comprising analyzing the statistical data (52) to produce a result addressing the network usage related business problem (69).

3. The method of claim 1, wherein collecting the critical usage data includes receiving usage data from the usage data source (31); and collecting the critical usage data from the usage data (32).

4. The method of claim 1, further comprising collecting a second set of critical usage data (32); and updating the statistical data (36) using the second set of critical usage data.

5. The method of claim 1, wherein the step of defining a statistical model (50) includes defining an ordered histogram, the method further comprising generating an ordered histogram using the statistical data stored in an accumulation table; and storing the ordered histogram in a distribution table.

6. The method of claim 5, wherein defining a statistical model (50) further includes defining a cumulative probability distribution; the method further comprising determining the cumulative probability distribution using the ordered histogram; and storing the cumulative probability distribution in the distribution table.

7. The method of claim 1, further comprising the step of using the statistical model (50) to perform interactive analysis of the critical usage data.

8. The method of claim 31, wherein defining a statistical model (50) includes defining a multi-dimensional statistical model (200) corresponding to the statistical model; and wherein storing the statistical data includes storing the statistical data in a multi-dimensional data structure (230).

9. The method of claim 7 or 8, wherein the step of defining a statistical model (50) includes the step of defining the statistical model to include a variable element; and further comprising changing the variable element to interactively model network usage.

**10.** A network usage analysis system (30) for performing the method of claims 1, 2, 3, 4, 5, 6, 7, 8 or 9 comprising:

a critical usage data collector (32) for collecting the set of critical usage data from the usage data source;
a critical usage data analysis system server (34), wherein the critical usage data analysis system server (34) receives the set of critical usage data from the critical usage data collector (32) and generates the statistical data (52) based on the set of critical usage data and the predefined statistical model (50); and
data storage system (36), wherein the critical usage data analysis system server stores the statistical data (52) in the data storage system (36).

Fig. 1

EP 1 146 687 A2

58

| DEFINING A STATISTICAL MODEL FOR SOLVING A NETWORK USAGE RELATED BUSINESS PROBLEM | 60 |

| DETERMINING CRITICAL USAGE DATA TYPES REQUIRED BY THE STATISTICAL MODEL | 62 |

| COLLECTING CRITICAL USAGE DATA OF THE CRITICAL USAGE DATA TYPES FROM A USAGE DATA SOURCE | 64 |

| GENERATING STATISTICAL DATA USING THE CRITICAL USAGE DATA AND THE STATISTICAL MODEL | 66 |

| STORING THE STATISTICAL DATA | 68 |

| ANALYZING THE STATISTICAL DATA TO PRODUCE A RESULT ADDRESSING THE NETWORK USAGE RELATED BUSINESS PROBLEM | 69 |

# Fig. 2

Fig. 3

Fig. 4

74

**Fig. 5**

76

**Fig. 6**

Fig. 7

130

132                    134

| Entry | Subscriber ID | Accum. MB |
|-------|---------------|-----------|
| 1 | Sub1 | 1.1 MB |
| 2 | Sub2 | 43MB |
| ... | ... | ... |
| N | SubN | 12MB |

# Fig. 8

140

142        144        146        147        148        149

| Customer ID | Class ID | Service ID | Hour of Day | Date | Cum MB |
|-------------|----------|------------|-------------|------|--------|

# Fig. 9

150

| Range, MB | # Hits, $N_i$ | Total MB, $M_{T_i}$ | Avg MB, $M_{Avg_i}$ | Prob. Dist. $F_{A_i}$ |
|---|---|---|---|---|
| 0-1 | | | | |
| 1-2 | | | | |
| ... | | | | |
| 49-50 | | | | |
| >50 | | | | |

154  158  159  156  152

## Fig. 10

160

| MB | Dist | MB | Dist | MB | Dist | MB | Dist | MB | Dist |
|---|---|---|---|---|---|---|---|---|---|
| 1 | 0.0055 | 11 | 0.4059 | 21 | 0.7156 | 31 | 0.8912 | 41 | 0.9672 |
| 2 | 0.0330 | 12 | 0.4428 | 22 | 0.7390 | 32 | 0.9025 | 42 | 0.9713 |
| 3 | 0.0769 | 13 | 0.4784 | 23 | 0.7610 | 33 | 0.9128 | 43 | 0.9749 |
| 4 | 0.1205 | 14 | 0.5129 | 24 | 0.7816 | 34 | 0.9221 | 44 | 0.9782 |
| 5 | 0.1635 | 15 | 0.5460 | 25 | 0.8009 | 35 | 0.9307 | 45 | 0.9810 |
| 6 | 0.2060 | 16 | 0.5777 | 26 | 0.8190 | 36 | 0.9384 | 46 | 0.9836 |
| 7 | 0.2478 | 17 | 0.6081 | 27 | 0.8357 | 37 | 0.9455 | 47 | 0.9858 |
| 8 | 0.2887 | 18 | 0.6371 | 28 | 0.8513 | 38 | 0.9518 | 48 | 0.9878 |
| 9 | 0.3288 | 19 | 0.6647 | 29 | 0.8657 | 39 | 0.9575 | 49 | 0.9895 |
| 10 | 0.3679 | 20 | 0.6909 | 30 | 0.8790 | 40 | 0.9626 | 50 | 0.9910 |

## Fig. 11

Fig. 12

Fig. 13

240

242    244

| Hour | # Hits, $N_i$ | Total MB, $M_T$ |
|------|---------------|-----------------|
| 0    | Sub1          | 1.1 MB          |
| 1    | Sub2          | 43MB            |
| ...  | ...           | ...             |
| 23   | SubN          | 12MB            |

# Fig. 14

47

N

NETWORK USAGE
DATE REPORTING
SYSTEM
-OR-
USAGE DATA SOURCE

31

30

46

34

49

CRITICAL
USAGE DATA
COLLECTOR

32

38

CRITICAL USAGE
DATA ANALYSIS
SYSTEM SERVER

USER
INTERFACE

42

STATISTICAL
MODEL

50

DISPLAY
SYSTEM

44

48

247

40

Fig. 15

DATA
STORAGE
SYSTEM

36

52

248

246

30

250

DEFINING A FINANCIAL MODEL ———252

DEFINING A STATISTICAL MODEL FOR
USE WITH THE FINANCIAL MODEL FOR
FOR SOLVING A FINANCIAL NETWORK
USAGE RELATED BUSINESS PROBLEM ——254

DETERMINING CRITICAL USAGE DATA
TYPES REQUIRED BY THE STATISTICAL
MODEL ——256

COLLECTING CRITICAL USAGE DATA
OF THE CRITICAL USAGE DATA TYPES
FROM A USAGE DATA SOURCE ——258

GENERATING STATISTICAL DATA
USING THE CRITICAL USAGE DATA
AND THE STATISTICAL MODEL ——260

STORING THE STATISTICAL DATA ——68

# Fig. 16